# EUROPÄISCHE PATENTANMELDUNG

(11) **EP 1 366 841 A1**
(43) Veröffentlichungstag der Anmeldung: **03.12.2003**
(21) Anmeldenummer: 03007633.5
(22) Anmeldetag: 03.04.2003
(51) Int. Cl.: B23B 29/04

(54) **Halter für ein Drehwerkzeug, insbesondere für einen Abstechstahl**

(30) Priorität: 29.05.2002 DE 10224127
(71) Anmelder: Graf, Ernst, 78661 Dietingen (DE)
(72) Erfinder: Graf, Ernst, 78661 Dietingen (DE)
(74) Vertreter: Späth, Dieter, Dipl.-Ing.

(57) **Zusammenfassung**

Die Erfindung betrifft einen Halter (10) für ein Drehwerkzeug, insbesondere für einen Abstechstahl (12). Die Erfindung schlägt vor, den Halter (10) mit zwei Spannbacken (22, 24) auszubilden, die zum Spannen des Abstechstahls (12) nach Art von Backen einer Zange gegeneinander verschwenkbar sind.

## Beschreibung

Die Erfindung betrifft einen Halter für ein Drehwerkzeug, insbesondere für einen Abstechstahl, mit den Merkmalen des Oberbegriffs des Anspruchs 1.

Es sind derartige Halter bekannt, die aus einem Vierkantstahl bestehen. An einem Ende des Vierkantstahls ist eine Ausnehmung zur Aufnahme des Drehwerkzeugs angebracht. Die Ausnehmung kann beispielsweise ein Schlitz oder eine Nut an einer Seitenfläche des Vierkantstahls sein. In die Ausnehmung mündet ein Schlitz, der die Ausnehmung verlängernd im Vierkantstahl angebracht ist und der den Vierkantstahl quer durchsetzt. Die Ausnehmung und der Schlitz teilen das vordere Ende des Vierkantstahls in zwei Spannbacken die durch den Schlitz elastisch gegeneinander beweglich sind. Zum Spannen ist eine Spannschraube vorgesehen, die den Schlitz durchsetzt. Durch An- und Festziehen der Spannschraube werden die beiden Spannbacken aufeinander zu bewegt und spannen ein in die Ausnehmung eingesetztes Drehwerkzeug fest.

Derartige Halter haben den Nachteil ungünstiger Kraftverhältnisse beim Spannen. Die Spannschraube greift mit kürzerem Hebelarm an den Spannbacken an als die Spannbacken am Drehwerkzeug angreifen. Dies hat eine Kraftuntersetzung zur Folge, mit der Spannschraube muss eine größere Spannkraft aufgebracht werden als am Drehwerkzeug wirksam ist. Weiterer Nachteil derartiger Halter ist eine Aufweitung der Ausnehmung zum freien, d. h. einem Werkstück zugewandten Ende hin aufgrund elastischer Verformung der beiden Spannbacken durch das Spannen mit der Spannschraube. Das Drehwerkzeug ist dadurch an dem einem Werkstück zugewandten Ende des Halters schlechter gespannt als an einem dem Werkstück abgewandten Ende des Drehwerkzeugs. Bei hoher Belastung kann sich das Drehwerkzeug in der Ausnehmung des Halters verschieben oder herausgerissen werden. Außerdem kann es durch schlechte Abstützung des Drehwerkzeugs an dem dem Werkstück zugewandten Ende des Halters zu Vibrationen des Drehwerkzeugs, dem sog. "Rattern" kommen.

Der Erfindung liegt die Aufgabe zugrunde, einen Halter für ein Drehwerkzeug, insbesondere für einen Abstechstahl vorzuschlagen, mit dem das Drehwerkzeug besser festspannbar ist.

Diese Aufgabe wird erfindungsgemäß durch die Merkmale des Anspruchs 1 gelöst. Der erfindungsgemäße Halter weist zwei Spannbacken auf, die nach Art von Backen einer Zange ausgebildet sind. Des weiteren weist der erfindungsgemäße Halter ein Schwenkgelenk auf, mit dem die beiden Spannbacken nach Art von Backen einer Zange schwenkbar miteinander verbunden sind. Mit einer Spanneinrichtung sind die beiden Spannbacken so aufeinander zu schwenkbar, dass sie ein zwischen ihnen befindliches Drehwerkzeug festspannen.

Die Erfindung hat den Vorteil, dass sie ein definierten Festspannen eines Drehwerkzeugs zwischen den Spannbacken ermöglicht. Die Spannbacken lassen sich steif ausbilden, so dass sie als starr angesehen werden können und eine elastische oder sonstige Verformung nahezu null ist. Weiterer Vorteil der Erfindung ist, dass sie eine weitgehend freie Formgebungsmöglichkeit für die Spannbacken gewährleistet.

Eine Ausgestaltung der Erfindung sieht vor, dass eine der beiden Spannbacken eine Stützbacke bildet. Die Stützbacke ist diejenige der beiden Spannbacken, die ein eingespanntes Drehwerkzeug beim Drehen gegen die durch das Drehen auf das Drehwerkzeug wirkende Hauptkraft abstützt. Die Stützbacke ist erfindungsgemäß feststehend am Halter ausgebildet. Diese Ausgestaltung der Erfindung hat den Vorteil, dass die die beim Drehen wirkende Hauptkraft aufnehmende Spannbacke stabil am Halter angeordnet ist und dass die Stützbacke das Drehwerkzeug am Halter positioniert, was für eine genaue Positionierung des Drehwerkzeugs am Halter von Bedeutung ist.

Eine Ausgestaltung der Erfindung sieht vor, die beiden Spannbacken als ebene, flächenförmige Teile auszubilden. Die Spannbacken lassen sich dadurch einfach und preisgünstig aus einem ebenen, flächenförmigen Werkstoff, beispielsweise aus Blechtafeln, herstellen. Die Herstellung kann beispielsweise durch Trennen z. B. durch Stanzen, Laserschneiden oder dgl. hergestellt werden.

Vorzugsweise weisen die beiden Spannbacken gemeinsam eine in etwa kreisrunde Form auf. Bei einer weiteren Ausführungsform der Erfindung weist der Halter selbst eine in etwa kreisrunde Grundform auf. Mit in etwa ist nicht nur gemeint, dass die Form von einer exakten Kreisform abweicht, sondern insbesondere sollen durch diese Formulierung Aussparungen oder Ausformungen am Umfang des Halters oder der Spannbacken einbezogen werden. Diese Ausführungsformen weisen eine erhöhte Steifigkeit insbesondere bei einem Seitendruck auf ein in den Halter eingespanntes Werkzeug auf. Zudem ermöglicht eine in etwa kreisrunde Form, zu der sich die beiden Spannbacken ergänzen eine konstruktiv günstige Anordnung eines Schwenkgelenks für eine oder beiden Spannbacken in deren Zentrum. Beide in diesem Absatz genannten Ausführungsformen der Erfindung sind wahlweise unabhängig einzeln oder gemeinsam an einem Halter verwirklichbar.

Bei einer Ausgestaltung der Erfindung weist der Halter zwei Abstützungen auf, die die beiden Spannbacken und/oder ein in den Halter eingespanntes Drehwerkzeug auf beiden Seiten seitlich abstützen. Dadurch ist die Stabilität der beiden Spannbacken in seitlicher Richtung und/oder der Halt eines eingespannten Werkzeugs bei seitlichem Druck auf das Werkzeug erhöht.

Eine Ausgestaltung der Erfindung sieht vor, die Spannbacken so zu formen und anzuordnen, dass die Spannbacken beim Spannen eines Drehwerkzeugs zuerst im Bereich ihrer freien, d. h. einem Werkstück zugewandten Enden am Drehwerkzeug zur Anlage kommen. Mit zunehmender Spannkraft legen sich die Spannbacken über eine gesamte Spannlänge am Drehwerkzeug an. Die Spannlänge ist beispielsweise eine zwischen den Spannbacken befindliche Länge des Drehwerkzeugs. Diese Ausgestaltung der Erfindung hat den Vorteil, dass sie ein Spannen des Drehwerkzeugs an/ einem einem Werkstück zugewandten Ende der Spannbacken sicherstellt. Das Drehwerkzeug ist dadurch höher belastbar ohne dass die Gefahr besteht, dass das Drehwerkzeug sich im Halter verschiebt oder aus dem Halter herausgerissen wird. Des weiteren stützt der Halter das Drehwerkzeug an der einem Werkstück am nächsten liegenden Stelle des Halters ab, wodurch ein Überstand des Drehwerkzeugs über den Halter kurz ist. Eine Neigung des Drehwerkzeugs zum Schwingen (Rattern) ist dadurch verringert. Es ist Vorteil der Erfindung, dass sie die in diesem Absatz erläuterte Formgebung der Spannbacken in einfacher Weise ermöglicht.

Als Spanneinrichtung sieht eine Ausgestaltung der Erfindung einen Kulissenstein vor, der an einer der beiden Spannbacken angreift. Der Kulissenstein ist in einer Kulissenbahn des Halters verschieblich geführt und mit einem Schraubtrieb verschiebbar. Der Schraubtrieb kann beispielsweise eine in den Kulissenstein eingeschraubte Spannschraube aufweisen, die am Halter axial abgestützt ist. Durch Drehen des Schraubtriebs wird der Kulissenstein verschoben und verschwenkt eine der beiden Spannbacken gegenüber der anderen Spannbacke. Auf diese Weise lässt sich ein Drehwerkzeug zwischen den Spannbacken festspannen. Durch einen Abstand der Spanneinrichtung von einer gedachten Schwenkachse des Schwenkgelenks des erfindungsgemäßen Halters lässt sich ein Hebelarm, mit dem die Spanneinrichtung an der Spannbacke angreift, und damit ein Kraftübersetzungs- oder -untersetzungsverhältnis, mit dem eine von der Spanneinrichtung aufgebrachte Spannkraft auf das Drehwerkzeug übertragen wird, wählen.

Eine Ausgestaltung der Erfindung sieht eine Hinterschneidung vor, die formschlüssig mit einer korrespondierenden Hinterschneidung eines in den Halter eingespannten Drehwerkzeugs in Eingriff steht. Die Hinterschneidung hält das Drehwerkzeug im Halter wenn die beim Drehen auf das Drehwerkzeug wirkende Kraft so groß ist, dass sie die Spannkraft des Halters überwindet. Insbesondere wenn das Drehwerkzeug nicht ausreichend fest eingespannt worden ist oder sich beispielsweise durch Vibrationen beim Drehen lockert vermeidet diese Ausgestaltung der Erfindung ein Herausziehen des Drehwerkzeugs aus dem Halter. Die Hinterschneidung kann beispielsweise durch eine konkave Wölbung einer Spannfläche einer Spannbacke gebildet sein, die mit einer komplementär konvex gewölbten Seite des Drehwerkzeugs zusammenwirkt.

Die Erfindung wird nachfolgend anhand eines in der Zeichnung dargestellten Ausführungsbeispiels näher erläutert. Es zeigen:
- Figur 1: eine Seitenansicht eines erfindungsgemäßen Halters gemäß Pfeil I in Figur 2; und
- Figur 2: eine Draufsicht des Halters aus Figur 1 gemäß Pfeil II in Figur 1.

Der in der Zeichnung dargestellte, erfindungsgemäße Halter 10 ist zum Spannen eines Drehwerkzeugs (Abstechstahl 12) auf einer nicht dargestellten Drehmaschine vorgesehen. Der Halter 10 weist ein plattenförmiges Grundteil 14 auf, das in Seitenansicht in etwa die Form eines Kreises mit einer an einer Stelle des Umfangs abstehenden Befestigungseinrichtung 16 aufweist. Die Befestigungseinrichtung 16 weist in Draufsicht auf den Halter 10 die Form einer U-förmigen Profilschiene auf. Die Besfestigungseinrichtung 16 ist einstückiger Bestandteil des Grundteils 14. Sie steht auf einer Stirnseite des Grundteils über und ist mit der anderen Stirnseite des Grundteils 14 bündig. Die Befestigungseinrichtung 16 dient zum Anbringen des Halters 10 an einer Drehmaschine. Sie weist eine Höhenjustierschraube 18 auf. Auf einer der Befestigungseinrichtung 16 gegenüberliegenden Umfangsstelle weist das Grundteil 14 eine kreisbogenförmige Aussparung 20 auf, in deren Bereich sich der Abstechstahl 12 befindet.

An derjenigen Stirnseite des Grundteils 14, mit der die Befestigungseinrichtung 16 bündig ist, sind zwei Spannbacken 22, 24 angebracht. Beide Spannbacken 22, 24 sind ebene, flächenförmige Teile, sie sind aus einem Stahlblech herausgetrennt. Eine der beiden Spannbacken 22 ist feststehend, sie ist mit dem Grundteil 14 des Halters 10 mit zwei Schrauben 26 verschraubt. Diese Spannbacke 22 bildet eine Stützbacke 22 und wird nachfolgend zur Unterscheidung von der anderen Spannbacke 24 auch als Stützbacke 22 bezeichnet werden. Die Stützbacke 22 weist in Seitenansicht die Form eine Kreisbogens auf, der sich in Umfangsrichtung um etwas weniger als einen Halbkreis erstreckt. Im Bereich der kreisförmigen Aussparung 20 des Grundteils 14 des Halters 10 weist die Stützbacke 22 eine stufenförmige Ausnehmung 28 auf, in der der Abstechstahl 12 passgenau einliegt. Die Stützbacke 22 ist so am Halter 10 angeordnet, dass eine beim Drehen von einem nicht dargestellten Werkstück auf den Abstechstahl 12 ausgeübte Kraft den Abstechstahl 12 gegen die feststehende Stützbacke 22 drückt.

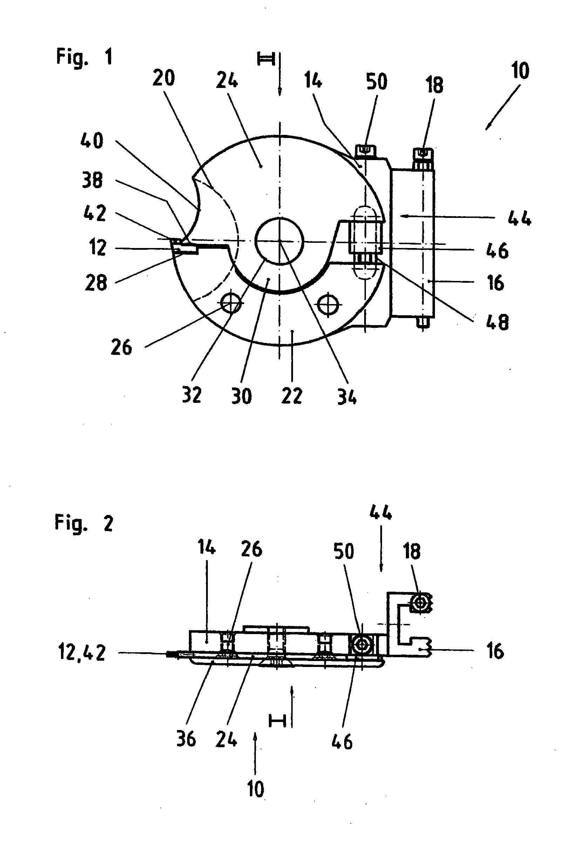

Die andere Spannbacke 24, die nachfolgend zur Unterscheidung von der Stützbacke 22 auch als bewegliche Spannbacke 24 bezeichnet werden wird, hat in Seitenansicht näherungsweise die Form eines Halbkreises, wobei sie ein Zentrum des Grundteils 14 mit einer kreisbogenförmigen Auswölbung 30 umfasst. Gemeinsam ergänzen sich die beiden Spannbacken 22, 24 in etwa zu einer Kreisform. Die bewegliche Spannbacke 24 weist ein Loch 32 auf, mit dem sie schwenkbar auf einem kreisrunden Zapfen 34 gelagert ist, der mit dem Grundteil 14 verschraubt ist. Der Zapfen 34 steht um etwas mehr als eine Dicke der beweglichen Spannbacke 24 über die Stirnseite des Grundteils 14 vor. Eine aufgeschraubte Abdeckplatte 36 hält die bewegliche Spannbacke 24 am Grundteil 14. Die Abdeckplatte 36 ist in Figur 1 nicht gezeichnet damit die Spannbacken 22, 24 sichtbar sind. Der Zapfen 34 bildet mit dem Loch 32 ein Schwenkgelenk für die bewegliche Spannbacke 24, das sich im Zentrum der beiden einander zu in etwa einem Kreis ergänzenden Spannbacken 22, 24 befindet. Durch das Schwenkgelenk 32, 34 sind die beiden Spannbacken 22, 24 nach Art von Backen einer Zange schwenkbar miteinander verbunden.

Die beiden Spannbacken 22, 24 befinden sich zwischen der Abdeckplatte 36 und dem Grundteil 14 des Halters 10. Die Abdeckplatte 36 und das Grundteil 14 bilden zwei seitliche Abstützungen 14, 36 für die beiden Spannbacken 22, 24 und für ein in den Halter 10 eingespanntes Werkzeug 12

An einem der Stützbacke 22 zugewandten Rand weist die bewegliche Spannbacke 24 eine konkave, bogenförmige Ausnehmung 38 auf, in der der Abstechstahl 12 mit einer komplementären, bogenförmigen, konvexen Wölbung passgenau einliegt. Die Ausnehmung 38 der beweglichen Spannbacke 24 bildet eine ebenfalls mit 38 bezeichnete Hinterschneidung, die den Abstechstahl 12 formschlüssig gegen ein Herausziehen aus dem Halter 10 hält. An ihrem Umfangsrand weist die bewegliche Spannbacke 24 eine bogenförmige konkave Aussparung 40 im Anschluss an die Ausnehmung 38 auf. Die Aussparung 40 bewirkt eine Freifläche an einer Spanfläche 42 des Abstechstahls 12.

Zum Festspannen des Abstechstahls 12 zwischen den Spannbacken 22, 24 weist der erfindungsgemäße Halter 10 eine Spanneinrichtung 44 auf. Die Spanneinrichtung 44 umfasst einen Kulissenstein 46, der in einer Kulissenbahn 48 verschieblich geführt ist. Bezüglich des Schwenkgelenks 32, 34 der beweglichen Spannbacke 24 ist die Spanneinrichtung 44 dem Abstechstahl 12 gegenüberliegend am Halter 10 angeordnet. Die Kulissenbahn 48 verläuft tangential zum Schwenkgelenk 30, 34. Zum Verschieben des Kulissensteins 46 ist eine Spannschraube 50 in den Kulissenstein 46 eingeschraubt. Die Spannschraube 50 bildet ein Schraubtrieb für den Kulissenstein 46. Durch Drehen der Spannschraube 50 in einer Spannrichtung wird der Kulissenstein 46 in Anlage an die bewegliche Spannbacke 24 verschoben und verschwenkt diese so, dass der Abstechstahl 12 zwischen den beiden Spannbacken 22, 24 festgespannt wird.

Durch das Schwenkgelenk 30, 34 und die Spanneinrichtung 44 sind die beiden Spannbacken 22, 24 zum Festspannen des Abstechstahls 12 zwischen sich nach Art von Backen einer Zange gegeneinander schwenkbar, wobei nur die bewegliche Spannbacke 24 gegenüber dem Halter 10 schwenkbar ist.

Spannflächen der Spannbacken 22, 24 sind so geformt, dass sie beim Einspannen des Abstechstahls 12 zuerst mit ihren freien, dem Schwenkgelenk 32, 34 fernen Enden am Abstechstahl 12 zur Anlage kommen. Mit zunehmendem Anziehen der Spannschraube 50 legen sich die Spannflächen über ihre gesamte Länge an den Abstechstahl 12 an. Die in der Zeichnung nicht bezeichneten Spannflächen werden von den Rändern der stufenförmigen Ausnehmung 28 der Stützbacke 22 und der konkav gewölbten Ausnehmung 38 der beweglichen Spannbacke 24 gebildet.

## Patentansprüche

1. Halter für ein Drehwerkzeug, insbesondere für einen Abstechstahl, wobei der Halter zwei gegeneinander bewegliche Spannbacken und eine Spanneinrichtung zum Festspannen des Drehwerkzeugs mit den Spannbacken aufweist, **dadurch gekennzeichnet, dass** die Spannbacken (22, 24) nach Art der Backen einer Zange ausgebildet sind und dass der Halter (10) ein Schwenkgelenk (32, 34) aufweist, das die Spannbacken (22, 24) nach Art der Backen einer Zange schwenkbar miteinander verbindet.

2. Halter nach Anspruch 1, **dadurch gekennzeichnet, dass** eine der beiden Spannbacken (22) eine Stützbacke (22) bildet und dass die Stützbacke (22) feststehend ist.

3. Halter nach Anspruch 1 oder 2, **dadurch gekennzeichnet, dass** die beiden Spannbacken (22, 24) ebene, flächenförmige Teile sind.

4. Halter nach einem der Ansprüche 1 bis 3, **dadurch gekennzeichnet, dass** die beiden Spannbacken (22, 24) gemeinsam eine in etwa kreisrunde Form aufweisen.

5. Halter nach einem der Ansprüche 1 bis 4, **dadurch gekennzeichnet, dass** der Halter (10) eine in etwa kreisrunde Grundform aufweist.

6. Halter nach einem der Ansprüche 1 bis 5, **dadurch gekennzeichnet, dass** der Halter (10) zwei seitliche Abstützungen (14, 36) aufweist, die beide Spannbacken (22, 24) auf beiden Seiten seitlich abstützen.

7. Halter nach einem der Ansprüche 1 bis 6, **dadurch gekennzeichnet, dass** der Halter (10) zwei seitliche Abstützungen (14, 36) aufweist, die ein in den Halter (10) eingespanntes Drehwerkzeug (12) auf beiden Seiten seitlich abstützen.

8. Halter nach einem der Ansprüche 1 bis 7, **dadurch gekennzeichnet, dass** die Spannbacken (22, 24) so geformt und angeordnet sind, dass sie beim Spannen eines Drehwerkzeugs (12) zuerst im Bereich ihrer freien Enden an dem Drehwerkzeug (12) zur Anlage kommen.

9. Halter nach einem der Ansprüche 1 bis 8, **dadurch gekennzeichnet, dass** die Spanneinrichtung (44) einen Kulissenstein (46) aufweist, der in einer Kulissenbahn (48) verschieblich geführt ist, der mit einem Schraubtrieb (50) verschiebbar ist und der beim Verschieben eine der beiden Spannbacken (24) gegenüber der anderen Spannbacke (22) verschwenkt.

10. Halter nach einem der Ansprüche 1 bis 9, **dadurch gekennzeichnet, dass** der Halter (10) eine Hinterschneidung (38) aufweist, die ein eingespanntes Drehwerkzeug (12) formschlüssig gegen Herausziehen im Halter (10) hält.
